# EUROPEAN PATENT SPECIFICATION

(11) **EP 2 751 179 B1**
(45) Date of publication and mention of the grant of the patent: **04.11.2020**
(21) Application number: 12756227.0
(22) Date of filing: 29.08.2012
(51) Int. Cl.: C08J 9/00, C08J 9/22, C08J 9/224, C08J 9/232, C08K 5/00, C08K 5/56

(54) **EXPANDABLE POLYMERIC BEADS AND THEIR PRODUCTION**
EXPANDIERBARE POLYMERPERLEN UND IHRE HERSTELLUNG
BILLES POLYMÈRES EXPANSIBLES ET LEUR PRODUCTION

(30) Priority: 29.08.2011 FI 20115840
(43) Date of publication of application: 09.07.2014
(73) Proprietor: Bewi Styrochem OY, 06101 Porvoo (FI)
(72) Inventor: NIEMINEN, Jyri, FI-00790 Helsinki (FI); NURMINEN, Ville, FI-06101 Porvoo (FI); MÄKI, Markus, FI-00790 Helsinki (FI)
(74) Representative: Laine IP Oy
(86) International application number: PCT/FI2012/050834
(87) International publication number: WO 2013/030453

(56) References cited:
- US-A- 4 446 208
- US-A1- 2010 004 348
- US-A1- 2010 308 486
- US-B1- 6 277 491
- DATABASE WPI Week 198946 Thomson Scientific, London, GB; AN 1989-337164 XP002691121, & JP 1 252641 A (KOBAYASHI T) 9 October 1989 (1989-10-09) cited in the application

## Description

### Background of the Invention

### Field of the Invention

The present invention relates to polystyrene beads. In particular, the present invention concerns coated expandable polystyrene (EPS) beads and a method for the production thereof. The present invention also concerns expanded polystyrene article obtained by expanding the antimicrobial expandable polystyrene beads.

### Description of Related Art

Expanded articles have been used for some time, for example to improve the thermal insulation of buildings. Generally, these articles are prepared by either extrusion or molding through the swelling of polymer beads. Additives can be used to improve the desired properties of the articles.

Expandable polystyrene (EPS) is becoming increasingly common for use in such articles. EPS is a rigid and tough, closed-cell foam, generally made of pre-expanded polystyrene beads. Common uses of these EPS beads include molded sheets for building insulation and packing material for cushioning fragile items. The latest advances in the technology related to these EPS beads concern improving the thermal insulation of the articles prepared from the beads.

EPS beads have also been used for antimicrobial purposes.

KR 20080081409 discloses a method for preparing an antibacterial styrofoam using colloidal silver and a vinyl acetate resin, together with an expandable polystyrene, which is not foamed until after the coating and drying.

JP 2009051895 discloses a resin comprising a foamed resin, such as an expanded polystyrene, and an antimicrobial agent. The antimicrobial agent is obtained by subjecting an antimicrobial polymer to graft polymerization on the surface of silica particle. Expandable polystyrene beads whose surface or surface layer is coated or incorporated with a fluorine-containing block copolymer, comprising of a fluorine -containing vinyl type polymer segment derived from a fluorine containing vinl-type monomer and a lipophiliv vinyl type polymer segment derived from a lipophilic vinyl-type monomer is disclosed in US patent number 6,277,491.

US patent application 2010/308486 describes expandable or pre-expanded polystyrene particles coated with a coating composition comprising liquid polyethylene glycol and a solid part comprising e.g. a polyolefin wax, a metal acid of a higher fatty acid, polyethylene glycol and or a fatty bis-amide or fatty amide.

US 2010/004348, also a US patent application, discloses an expandable styrene polymer which comprises athermanous particles and has been coated with a hydrophobicizing agent. which comprises from 10 to 90% by weight of at least one triesterof at least one fatty acid with a polyhydric alcohol, as component A, from 5 to 70% by weight of at least one monoester of a fatty acid with a polyhydric alcohol, as component B. from 5 to 80% by weight of at least one metal salt of a fatty acid. as component C. from 5 to 50% by weight of at least one silicate, as component D. and from 0 to 30% by weight of at least one antistatic agent, as component E, and the entirety of components A to E of the hydrophobicizing agent amounts to 100% by weight, to a process for preparation of expandable styrene polymer, via coating of an expandable styrene polymer, which comprises athermanous particles, with a hydrophobicizing agent, to a foam produced from this expandable styrene polymer, and also to the use of a hydrophobicizing agent for coating of expandable styrene polymers comprising athermanous particles.

US patent application 4,446,208 relates to a composition and process for reducing the adhesion of expandable polystyrene beads impregnated with a blowing agent such as pentane. The composition comprises effective amounts of magnesium stearate and zinc stearate respectively. The composition is added to the polystyrene in an apparatus such as a tumble blender prior to pre-expansion of the impregnated polystyrene beads.

JP 1252641 discloses a sanitary foam, obtained by dispersing and adhering a zeolite containing silver ions to the surfaces of expanded styrene beads, pre-expanding and expansion-molding these beads.

JP 11209500 discloses styrene beads coated with silver oxide, and expanded articles prepared therefrom.

US 4166890 discloses expandable polyolefin beads that may be formed from polyethylene and be mixed with zinc stearate.

US 2007027224 discloses expanded beads formed, for example from polystyrene, containing also antimicrobial agents, for example as a coating.

WO 2008148642 discloses expandable polystyrene beads coated with a metal layer.

However, no expandable beads prepared using the materials of the present invention and coated or mixed with antimicrobial materials in unexpanded form have been described in the solutions of the prior art.

### Summary of the Invention

It is an object of the present invention to provide expandable polymer beads having antibacterial properties, as well as a method for their production.

Particularly, it is an object of the present invention to provide antibacterial, expandable polymer beads, wherein one or more antibacterial agents have been added either into the polymer matrix or as a coating onto the beads.

These and other objects, together with the advantages thereof over known expandable polymer beads, are achieved by the present invention, as hereinafter described and claimed.

The present invention concerns expandable polystyrene (EPS) beads containing one or more antimicrobial agents.

The present antimicrobial expandable polystyrene (EPS) beads are produced by mixing EPS beads, preferably by dry-mixing, with a solid antimicrobial agent containing ions of at least one transition metal, said antimicrobial agent being capable of adhering to the surface of the EPS beads.

The antimicrobial expandable beads of the present invention are characterized by what is stated in claim 1.

Further, the method of producing the beads is characterized by what is stated in claim 10.

Considerable advantages are obtained by means of the invention. Thus, the present invention provides expandable polymer beads that can be used to prepare foamed articles that, contrary to the known solutions, can be utilized in articles, such as food packaging, or spaces, such as buildings, requiring clean and non-contaminating surfaces.

### Detailed Description of Preferred Embodiments

The present invention concerns antimicrobial expandable polystyrene (EPS) beads, comprising, as the main antimicrobial agent, silver metal ions.

The EPS may be either standard EPS or fire resistant EPS.

The incorporation of the antimicrobial agent(s) can be done either by coating the agent(s) as such, or in a coating mixture onto the expandable beads or by adding the agent(s) directly into the polymer matrix. Preferably the beads are coated by depositing the metal ions on the surface of the beads. These metal ions are deposited in the form of a metal salt of a fatty acid.

A "fatty acid" is here meant to include carboxylic acids with aliphatic hydrocarbon tails having at least 3 carbon atoms which are either saturated or unsaturated.

The coating process can be executed for example with a conical screw mixer or with a rod blade mixer, or with any other mixing equipment suitable for EPS.

Said fatty acids function, among others, as lubricants. They are generally used in small amounts, such as 0.005 - 10 %, preferably 0.01 - 0.5%. Even amounts as small as 0.005 - 10 ‰, preferably 0.01 - 0.5 ‰, calculated based on the weight of the EPS beads, can be used. Particularly, 0.1 to 100 wt-%, most suitably 10 to 75 wt-%, of these fatty acids are comprised of silver salts of said acids.

The metal ions are silver or a mixture of silver with zinc. Particularly, the beads contain 0.01 to 10‰ of such a metal ion or a combination thereof, calculated based on the weight of the EPS beads. According to a preferred embodiment of the invention, the beads contain mixtures of two or more metal salts of fatty acids, at least one metal salt being derived from zinc cations and one metal salt being derived from silver cations.

According to another preferred embodiment, the beads contain 0.01 to 5 ‰ silver stearate, and optionally below 0.1 ‰ zinc stearate based on the weight of the bead (including the antimicrobial component). Silver stearate has the further advantage of functioning as an anti-caking agent.

The beads may have a lubricated surface to allow for expansion of the beads without formation of EPS agglomerates. This is, for example, achieved during a conventional pre-expansion carried out by applying steam and heat to the unexpanded beads.

Further additives may be added to the products either by mixing into the polymer matrix or by adding into the coating. Such further additives can be, for example, copolymers, antistatic agents, fire retardants, blowing agents, and agents lowering thermal conductivity, such as graphite or carbon black.

According to one embodiment of the invention, one or more surface treatment agents, such as agents increasing the compatibility of the beads to the ions of the above mentioned salts, is added to the beads, preferably prior to addition of the salts. Such agents may, for example, function as binders, increasing the content of ions bound to the bead surfaces, e.g. by changing the hydrophobicity of the bead surfaces. Examples of such agents are esters of glycerol and one or more fatty acids, particularly glycerol stearates, preferably selected from the mono-, di- and tri-stearates of glycerol, most suitably being a mixture of two or three of these stearates, thus providing a suitably controlled hydrophobicity on the surface to aid the binding of the ions of the above mentioned salts.

Among others, said surface treatment agents can be used to strengthen the binding of the metal salts, such as the silver stearate, to the surface of the bead, and thus intensify the antibacterial effect. Naturally, several different binders or other treatment agents are suitable for such use.

The amounts of such surface treatment agents are generally 0,001-10 w-%, particularly 0,005-5 w-%, most suitably 0,01-2,5 w-% of the weight of the bead.

The antimicrobial beads are obtainable by mixing, at essentially dry conditions, of EPS beads with one or more solid antimicrobial agents comprising silver metal ions as main antimicrobial agent, said antimicrobial agent being capable of adhering to the surface of the EPS beads.

Preferably said beads are obtainable by heating the antimicrobial agent during mixing to promote adherence to the surface of the EPS beads.

Further, the present invention concerns a method of producing coated antimicrobial expandable polystyrene (EPS) beads, comprising the step of mixing EPS beads with a solid antimicrobial agent containing one or more silver metal ions as the main antimicrobial agent, said antimicrobial agent being capable of adhering to the surface of the EPS beads.

The antimicrobial agent may be heated during mixing to promote adherence to the surface of the EPS beads. Preferably, the mixing is carried out under conditions of non-shear forces, and most suitably at essentially dry conditions.

Said antimicrobial agent is selected from, e.g., the metal salts of fatty acids capable of lubricating the surface of the beads, said acids having a softening point of less than about 60 °C.

According to a particularly preferred embodiment of the invention, the coated expandable beads are prepared by contacting 1000 parts by weight of the beads with 0.1 to 10 parts by weight of the antimicrobial agent, to produce antimicrobial beads containing 0.01 to 10 ‰ silver ions, calculated based on the weight of the EPS beads.

Most suitably the beads are coated with 0.1 to 5 ‰ silver stearate, and optionally below 0.1 ‰ zinc stearate.

The antimicrobial expandable beads can be processed the same way as normal expandable polystyrene. The formed products may have final densities of 5 - 150 kg/m³, but preferably between 12 - 30 kg/m³.

The pre-expanded beads formed according to the present invention can be fused together with any suitable method, typically by shape molding or block molding. The shapes or blocks produced this way can also be cut afterwards to form any kind of polystyrene foamed article or object, for example insulation board. A cut surface has been found to function as well as other surfaces.

The following examples are intended to merely illustrate the products according to the preferred embodiments of the invention and their properties.

### Examples

The examples utilize uncoated StyroChem K-710 grade EPS beads and various metal salts.

### Example 1

In this example, uncoated StyroChem K-710 grade EPS beads were coated with 0.1% of silver stearate, using the recipe shown in Table 1.

**Table 1. Coating recipe for beads of Example 1**

| **Material** | **Amount, g** |
|---|---|
| StyroChem EPS K-710 | 1000 |
| Silver Stearate | 1 |

To prepare these coated beads, the uncoated EPS beads were coated with silver and zinc stearate in a laboratory scale mixer. The mixing time used was 15 minutes and the final mixing temperature was 35 °C. After coating the material was pre-expanded with a batch pre-expander to a density of about 20 kg/m³, kept for 24 h in a silo and shape molded into sample boards of the size 400x400x50 mm. After one day, the sample boards were cut with a hot wire cutter into small sample pieces sized 50x50x10 mm. A number of 10 sample pieces were collected for measurement for both the original (mold surface sample, MSS) and the cut surface (cut surface sample, CSS).

### Silver ion dissolution analysis

The sample pieces (MSS and CSS) prepared according to Example 1 were subjected to silver ion dissolution analysis. Material samples were investigated in terms of silver ion release performances of both material surfaces into deionized MQ-water. Silver ion dissolution analysis was carried out using the approach of serial extraction. The method is based on contacting the surfaces of sample objects with a specific known volume of test solution, which is changed at specific time points, followed by measurement of silver concentration of each solution to determine the amount of silver released during each cycle.

The tests were performed by floating the sample pieces on the surface of a volume of 30 ml of deionized MQ-water. Sample containers containing the test objects were sealed and placed in an oven set to a constant temperature of 37 °C. The deionized MQ-water was replaced after time periods of 24 h and 48 h. The removed test solution samples were stabilized with trace purum HNO₃ and kept in a fridge until silver analysis. Silver analysis of the immersion solution samples were conducted using Inductively Coupled Plasma Mass Spectrometry (ICP-MS) according to ISO 17294-220 standard. The results are presented in Table 2 calculated as cumulative concentrations of the solutions and cumulative relative total silver amounts released from the 5x5 cm sample surfaces. The tests were carried out with duplicates of both sample material surfaces.

**Table 2. Cumulative silver ion dissolution performance of sample pieces produced in Example 1 as test solution concentrations (C. Ag) and released relative total silver amounts from the test piece surfaces (m_{tot.} Ag)**

| | **C. Ag (µg/l)** | **C. Ag (µg/l)** | **m_{tot.}** Ag **(µg)** | **m_{tot.} Ag (µg)** |
|---|---|---|---|---|
| *Time* | *24 h* | *48 h* | *24 h* | *48 h* |
| **Sample** | | | | |
| **MSS** | 185 | 240 | 5.6 | 7.2 |
| **CSS** | 63 | 112 | 1.9 | 3.4 |

| | | | | |
|---|---|---|---|---|
| * The results are presented as average values of the duplicate samples | | | | |

The results indicate exceptionally high silver release performance of both sample types in relation to the mass ratio of silver stearate to EPS. The silver stearate coating of the EPS beads remains throughout the expanding process, which enables production of moulded objects with high antimicrobial performance. The higher silver release performance of the MSS samples obviously derives from the presence of intact silver stearate coated expanded bead surfaces of the mould surface samples. In the case of cut surfaces, the expanded beads are cut and part of the sample surface is formed of the inner matrix of the expanded beads, however, as such still being able to provide a high silver release performance.

### Surface antimicrobial efficacy testing

Surface antimicrobial efficacy testing against Methicillin Resistant *Staphylococcus aureus* (MRSA) was performed for the mold surface sample (MSS) pieces following ISO 22196 standard. Suspension with a microbial count of 1.96 x 10⁶ cfu/ml was prepared from a pure culture. The suspension was pipetted (400 µl) and spread on test surfaces. The test surfaces with microbial suspension were covered with plastic foil and incubated at 36 °C for 24 hours in a humid chamber (relative humidity min. 90%). After the incubation the samples were placed into a sterile Stomacher bags each containing 9.9 ml buffer solution and incubated for 5 min. The bags were further shaken in a Stomacher device for one minute and a dilution series was pipetted on soya agar plates and incubated at 36 °C. After 24-48 hrs colonies were counted and the microbicidal efficacy was determined according to the standard. A high reduction of >log 4 was achieved for MRSA.

The results indicate exceptionally high silver release performance and surface antimicrobial efficacy for the obtained samples with as low as 0.1% (w/w) silver stearate content in the coating process.

The silver release performance may be further controlled by further reducing the amount of silver stearate and replacing part of the metal salt mass required for optimal process conditions with other metal salts of fatty acids, such as zinc stearate. Some of the applicable blending ratios of silver and zinc stearates are demonstrated in the following examples.

### Comparative Example 2

The procedure of Example 1 was repeated using the recipe shown in Table 3, containing a mixture of zinc stearate and silver stearate.

**Table 3. Coating recipe for beads of Example 2**

| **Material** | **Amount, g** |
|---|---|
| StyroChem EPS K-710 | 1000 |
| Zinc Stearate | 0.5 |
| Silver Stearate | 0.5 |

### Comparative Example 3

The procedure of Example 1 was repeated using the recipe shown in Table 4, containing a mixture of zinc stearate and silver stearate.

**Table 4. Coating recipe for beads of Example 3**

| **Material** | **Amount, g** |
|---|---|
| StyroChem EPS K-710 | 1000 |
| Zinc Stearate | 0.9 |
| Silver Stearate | 0.1 |

## Claims

1. Antimicrobial expandable polystyrene (EPS) beads, comprising as main antimicrobial agent silver ions, wherein the silver ions are deposited on the surface of the beads in the form of a metal salt of a fatty acid.

2. The antimicrobial beads according to claim 1, wherein the beads contain 0.01 to 10 ‰ silver, calculated from the weight of the EPS beads.

3. The antimicrobial beads according to claim 1 or 2, wherein the beads have a lubricated surface to allow for expansion of the beads, without formation of EPS agglomerates, during pre-expansion carried out by applying steam and heat to the beads.

4. The antimicrobial beads according to any of the preceding claims, wherein 0.1 to 100 wt-% of the salts deposited on the surface of the beads in the form of a metal salt of a fatty acid are comprised of silver salts of fatty acids.

5. The antimicrobial beads according to claim 4, wherein the beads contain a mixture of two or more salts of fatty acids, at least one metal salt being derived from zinc cations and one metal salt being derived from silver cations.

6. The antimicrobial beads according to any of the preceding claims, wherein the beads contain 0.01 to 5 ‰, by weight, of silver stearate, and optionally below 0.1 ‰, by weight, of zinc stearate.

7. The antimicrobial beads according to any of the preceding claims, obtainable by mixing, at dry conditions, of EPS beads with one or more solid antimicrobial agents comprising silver ions as main antimicrobial agent, said antimicrobial agent adhering to the surface of the EPS beads.

8. The antimicrobial beads according to claim 7, wherein said antimicrobial agent is the silver salt of a fatty acid lubricating the surface of the beads.

9. The antimicrobial beads according to any preceding claim, further containing one or more surface treatment agents.

10. A method of producing antimicrobial expandable polystyrene (EPS) beads according to any of claims 1 to 9, comprising the step of mixing EPS beads with a solid antimicrobial agent in the form of a fatty acid salt containing silver ions, said antimicrobial agent adhering to the surface of the EPS beads.

11. The method according to claim 10, wherein the antimicrobial agent is heated during mixing to promote adherence to the surface of the EPS beads.

12. The method according to claim 10 or 11, wherein the mixing is carried out at dry conditions and wherein said antimicrobial agent is the silver salt of a fatty acid lubricating the surface of the beads, said acid having a softening point of less than 60 °C.

13. The method according to any of claims 10 to 12, wherein the mixing of the EPS beads with the solid antimicrobial agent is carried out under conditions of non-shear forces.

14. The method according to any of claims 10 to 13, wherein 1000 parts by weight of the beads are contacted with 0.1 to 10 parts by weight of the antimicrobial agent, to produce antimicrobial beads containing 0.01 to 10 ‰ silver, calculated based on the weight of the EPS beads.

15. Expanded polystyrene article obtained by expanding of antimicrobial expandable polystyrene beads according to any of claims 1 to 9.

## Patentansprüche

1. Antimikrobielle, dehnbare Polystyrolperlen (EPS), umfassend Silberionen als antimikrobiellen Hauptwirkstoff, wobei die Silberionen auf der Oberfläche der Perlen in der Form eines Metallsalzes einer Fettsäure abgelagert werden.

2. Antimikrobielle Perlen nach Anspruch 1, wobei die Perlen 0,01 bis 10 ‰ Silber enthalten, berechnet aus dem Gewicht der EPS-Perlen.

3. Antimikrobielle Perlen nach Anspruch 1 oder 2, wobei die Perlen eine geschmierte Oberfläche aufweisen, um während einer Vorausdehnung, welche durch Anwenden von Dampf und Hitze auf die Perlen durchgeführt wird, eine Ausdehnung der Perlen ohne Bildung von EPS-Agglomeraten zu ermöglichen.

4. Antimikrobielle Perlen nach einem der vorstehenden Ansprüche, wobei 0,1 bis 100 Gew.-% der auf der Oberfläche der Perlen abgelagerten Salze in der Form eines Metallsalzes einer Fettsäure aus Silbersalzen von Fettsäuren bestehen.

5. Antimikrobielle Perlen nach Anspruch 4, wobei die Perlen eine Mischung von zwei oder mehr Salzen von Fettsäuren enthalten, wobei zumindest ein Metallsalz von Zinkkationen abgeleitet ist und ein Metallsalz von Silberkationen abgeleitet ist.

6. Antimikrobielle Perlen nach einem der vorstehenden Ansprüche, wobei die Perlen 0,01 bis 5 Gew.-‰ Silberstearat und optional unter 0,1 Gew.-‰ Zinkstearat enthalten.

7. Antimikrobielle Perlen nach einem der vorstehenden Ansprüche, erhältlich durch Mischen von EPS-Perlen mit einem oder mehreren festen antimikrobiellen Wirkstoffen, umfassend Silberionen als antimikrobiellem Hauptwirkstoff bei trockenen Bedingungen, wobei der antimikrobielle Wirkstoff an der Oberfläche der EPS-Perlen haftet.

8. Antimikrobielle Perlen nach Anspruch 7, wobei der antimikrobielle Wirkstoff das Silbersalz einer Fettsäure ist, welche die Oberfläche der Perlen schmiert.

9. Antimikrobielle Perlen nach einem der vorstehenden Ansprüche, weiter einen oder mehrere Oberflächenbehandlungswirkstoffe beinhaltend.

10. Erzeugungsverfahren für antimikrobielle, dehnbare Polystyrolperlen (EPS) nach einem der Ansprüche 1 bis 9, umfassend den Schritt des Mischens von EPS-Perlen mit einem festen antimikrobiellen Wirkstoff in der Form eines Fettsäuresalzes, welches Silberionen beinhaltet, wobei der antimikrobielle Wirkstoff an der Oberfläche der EPS-Perlen haftet.

11. Verfahren nach Anspruch 10, wobei der antimikrobielle Wirkstoff während des Mischens erhitzt wird, um das Haften an der Oberfläche der EPS-Perlen zu begünstigen.

12. Verfahren nach Anspruch 10 oder 11, wobei das Mischen bei trockenen Bedingungen ausgeführt wird, und wobei der antimikrobielle Wirkstoff das Silbersalz einer Fettsäure ist, welche die Oberfläche der Perlen schmiert, wobei die Säure einen Erweichungspunkt von weniger als 60 °C aufweist.

13. Verfahren nach einem der Ansprüche 10 bis 12, wobei das Mischen der EPS-Perlen mit dem festen antimikrobiellen Wirkstoff unter Bedingungen von Nicht-Scherkräften ausgeführt wird.

14. Verfahren nach einem der Ansprüche 10 bis 13, wobei 1000 Gewichtsteile der Perlen mit 0,1 bis 10 Gewichtsteilen des antimikrobiellen Wirkstoffs in Kontakt gebracht werden, um antimikrobielle Perlen zu erzeugen, welche 0,01 bis 10 ‰ Silber enthalten, berechnet auf Basis des Gewichts der EPS-Perlen.

15. Gedehnter Polystyrolartikel, welcher durch Ausdehnen von antimikrobiellen, dehnbaren Polystyrolperlen nach einem der Ansprüche 1 bis 9 erhalten wurde.

## Revendications

1. Billes antimicrobiennes en polystyrène expansible (EPS), comprenant en tant qu'agent antimicrobien principal des ions argent, dans lesquelles les ions argent sont déposés sur la surface des billes sous forme d'un sel métallique d'un acide gras.

2. Billes antimicrobiennes selon la revendication 1, dans lesquelles les billes contiennent de 0,01 à 10 ‰ d'argent, calculé à partir du poids des billes en EPS.

3. Billes antimicrobiennes selon la revendication 1 ou 2, dans lesquelles les billes ont une surface lubrifiée pour permettre une expansion des billes, sans formation d'agglomérats d'EPS, pendant une préexpansion réalisée en appliquant de la vapeur et de la chaleur aux billes.

4. Billes antimicrobiennes selon l'une quelconque des revendications précédentes, dans lesquelles de 0,1 à 100 % en poids des sels déposés sur la surface des billes sous la forme d'un sel métallique d'un acide gras sont composés de sels d'argent d'acides gras.

5. Billes antimicrobiennes selon la revendication 4, dans lesquelles les billes contiennent un mélange de deux sels ou plus d'acides gras, au moins un sel métallique qui est dérivé de cations de zinc et un sel métallique qui est dérivé de cations d'argent.

6. Billes antimicrobiennes selon l'une quelconque des revendications précédentes, dans lesquelles les billes contiennent de 0,01 à 5 ‰, en poids, de stéarate d'argent, et facultativement moins de 0,1 ‰, en poids, de stéarate de zinc.

7. Billes antimicrobiennes selon l'une quelconque des revendications précédentes, pouvant être obtenues par mélange, dans des conditions sèches, de billes en EPS, avec un ou plusieurs agents antimicrobiens solides comprenant des ions argent en tant qu'agent antimicrobien principal, ledit agent antimicrobien adhérant à la surface des billes en EPS.

8. Billes antimicrobiennes selon la revendication 7, dans lesquelles ledit agent antimicrobien est le sel d'argent d'un acide gras lubrifiant la surface des billes.

9. Billes antimicrobiennes selon une quelconque revendication précédente, contenant en outre un ou plusieurs agents de traitement de surface.

10. Procédé de production de billes antimicrobiennes en polystyrène expansible (EPS) selon l'une quelconque des revendications 1 à 9, comprenant l'étape de mélange de billes en EPS avec un agent antimicrobien solide sous forme d'un sel d'acide gras contenant des ions argent, ledit agent antimicrobien adhérant à la surface des billes en EPS.

11. Procédé selon la revendication 10, dans lequel l'agent antimicrobien est chauffé pendant le mélange pour favoriser une adhérence à la surface des billes en EPS.

12. Procédé selon la revendication 10 ou 11, dans lequel le mélange est réalisé dans des conditions sèches et dans lequel ledit agent antimicrobien est le sel d'argent d'un acide gras lubrifiant la surface des billes, ledit acide ayant un point de ramollissement inférieur à 60 °C.

13. Procédé selon l'une quelconque des revendications 10 à 12, dans lequel le mélange des billes en EPS avec l'agent antimicrobien solide est réalisé dans des conditions sans forces de cisaillement.

14. Procédé selon l'une quelconque des revendications 10 à 13, dans lequel 1 000 parties en poids des billes sont mises en contact avec de 0,1 à 10 parties en poids de l'agent antimicrobien, pour produire des billes antimicrobiennes contenant de 0,01 à 10 ‰ d'argent, calculé par rapport au poids des billes en EPS.

15. Article en polystyrène expansé obtenu par expansion de billes antimicrobiennes en polystyrène expansible selon l'une quelconque des revendications 1 à 9.
